# EUROPÄISCHE PATENTANMELDUNG

(11) **EP 2 684 772 A2**
(43) Veröffentlichungstag der Anmeldung: **15.01.2014**
(21) Anmeldenummer: 13172896.6
(22) Anmeldetag: 19.06.2013
(51) Int. Cl.: B62D 11/18

(54) **Kettenfahrzeug mit einem zentralen Antriebsmotor**

(30) Priorität: 12.07.2012 DE 102012212248
(71) Anmelder: Kässbohrer Geländefahrzeug AG, 88471 Laupheim (DE)
(72) Erfinder: Mayer, Stephan, 79853 Lenzkirch (DE)
(74) Vertreter: Patentanwälte Ruff, Wilhelm, Beier, Dauster & Partner

(57) **Zusammenfassung**

Ein derartiges Kettenfahrzeug mit einem zentralen Antriebsmotor (2), sowie mit zwei Kettenlaufwerksseiten, die jeweils durch ein Triebrad (1) für einen Fahr- und Lenkbetrieb antreibbar sind, wobei die Triebräder (1) mit dem zentralen Antriebsmotor (2) durch wenigstens einen Antriebsstrang in Wirkverbindung stehen, ist bekannt.

Erfindungsgemäß umfasst der Antriebsstrang ein Verteilergetriebe(4), das antriebseitig mit dem zentralen Antriebsmotor (2) verbunden ist, und das zwei Leistungsabtriebe (6, 7) aufweist, wobei ein erster Leistungsabtrieb (6)einem mechanischen Fahrantriebsstrang (M) für die beiden Triebräder (1) zugeordnet ist, und wobei ein zweiter Leistungsabtrieb (7) eine nicht mechanische Antriebseinheit (8 - 11) speist, die die Triebräder (1) parallel zu dem Fahrantriebsstrang (M) antreibt und eine Lenkfunktion des Kettenfahrzeugs übernimmt.

## Beschreibung

Die Erfindung betrifft ein Kettenfahrzeug mit einem zentralen Antriebsmotor, sowie mit zwei Kettenlaufwerksseiten, die jeweils durch ein Triebrad für einen Fahr- und Lenkbetrieb antreibbar sind, wobei die Triebräder mit dem zentralen Antriebsmotor durch wenigstens einen Antriebsstrang in Wirkverbindung stehen.

Ein derartiges Kettenfahrzeug ist allgemein bekannt. Das bekannte Kettenfahrzeug in Form einer Pistenraupe weist als zentralen Antriebsmotor einen Dieselmotor auf, der zwei hydraulische Verteilerpumpen eines Hydrauliksystems antreibt. Jede Laufwerksseite des Kettenlaufwerks wird durch ein Triebrad mit Hilfe eines Hydraulikmotors angetrieben, der Teil des Hydrauliksystems des Kettenfahrzeugs ist. Die beiden Hydraulikmotoren für die beiden Triebräder übernehmen sowohl eine Fahrfunktion als auch eine Lenkfunktion des Kettenfahrzeugs, indem sie in geeigneter Weise angesteuert werden.

Aufgabe der Erfindung ist es, ein Kettenfahrzeug der eingangs genannten Art zu schaffen, das einen verbesserten Wirkungsgrad seines Antriebssystems für den Fahr- und Lenkbetrieb aufweist.

Diese Aufgabe wird dadurch gelöst, dass der Antriebsstrang ein Verteilergetriebe umfasst, das antriebseitig mit dem zentralen Antriebsmotor verbunden ist, und das zwei Leistungsabtriebe aufweist, wobei ein erster Leistungsabtrieb einem mechanischen Fahrantriebsstrang für die beiden Triebräder zugeordnet ist, und wobei ein zweiter Leistungsabtrieb eine nichtmechanische Antriebseinheit speist, die die Triebräder parallel zu dem Fahrantriebsstrang antreibt und eine Lenkfunktion des Kettenfahrzeugs übernimmt. Als zentraler Antriebsmotor ist vorzugsweise ein Verbrennungsmotor, insbesondere ein Dieselmotor, vorgesehen. Es ist aber auch möglich, als zentralen Antriebsmotor einen Motor anderer Bauart einzusetzen, der als Energiequelle keine fossilen Brennstoffe, sondern andere Energieträger aufweist. Durch die erfindungsgemäße Leistungsverzweigung erfolgt ein Fahr- und Lenkbetrieb des Kettenfahrzeugs abhängig von der Fahrgeschwindigkeit des Kettenfahrzeugs zu geringerem oder größerem Anteil sowohl durch den mechanischen Fahrantriebstrang als auch durch die nichtmechanische Antriebseinheit. Erfindungsgemäß erfolgt eine Leistungsverzweigung hinter dem Verteilergetriebe, wobei die verzweigten Leistungsstränge im Bereich der Triebräder wieder zusammengeführt und dort summiert werden. Sowohl der mechanische Fahrantriebsstrang als auch die nichtmechanische Antriebseinheit wirken gemeinsam auf die Triebräder. Als nichtmechanische Antriebseinheit ist vorzugsweise eine hydraulische Antriebseinheit vorgesehen. Der Leistungsabtrieb des Verteilergetriebes bewirkt für diese Ausgestaltung vorzugsweise eine Betätigung entsprechender Hydraulikpumpen der hydraulischen Antriebseinheit, um den benötigten Volumenstrom innerhalb des Hydrauliksystems der hydraulischen Antriebseinheit aufzubauen, wodurch sich der jeweilige Hydraulikdruck einstellt. Alternativ ist es möglich, als nichtmechanische Antriebseinheit eine elektrische Antriebseinheit vorzusehen. Bei dieser Ausgestaltung kann der entsprechende Leistungsabtrieb des Verteilergetriebes vorzugsweise eine Generatorwelle antreiben, die entsprechende Elektromotoren, die den Triebrädern zugeordnet sind, mit Strom versorgen kann.

In weiterer Ausgestaltung der Erfindung ist jedem Triebrad jeweils ein hydrostatischer Motor der hydraulischen Antriebseinheit zugeordnet, der mit einem mechanischen Durchtrieb des mechanischen Fahrantriebsstranges versehen ist. Dadurch kann das jeweilige Triebrad gleichzeitig sowohl mechanisch als auch hydraulisch angetrieben werden.

In weiterer Ausgestaltung der Erfindung ist das Verteilergetriebe als Planetengetriebe gestaltet, dessen Planetenträger vom zentralen Antriebsmotor angetrieben ist, und das wenigstens einen Planetensatz umfasst, dem die beiden Leistungsabtriebe zugeordnet sind. Der eine Leistungsabtrieb wird vorzugsweise über ein Sonnenrad des Planetengetriebes abgenommen. Der andere Leistungsabtrieb wird vorzugsweise über ein äußeres Hohlrad des Planetengetriebes übertragen.

In weiterer Ausgestaltung der Erfindung umfasst die hydraulische Antriebseinheit zwei Hydraulikpumpen, die baulich nebeneinander am Verteilergetriebe angeordnet und von dem Leistungsabtrieb des Verteilergetriebes gemeinsam angetrieben sind. Diese Ausgestaltung ermöglicht den parallelen Antrieb beider Hydraulikpumpen mittels des einzelnen Leistungsabtriebs, der gemeinsam auf beide Hydraulikpumpen wirkt. Hierdurch ergibt sich eine kompakte Getriebebaueinheit, an der sowohl die genannten Teile der hydraulischen Antriebseinheit als auch Teile des mechanischen Fahrantriebsstranges wie insbesondere eine Kupplungs-und/oder Bremseinheit angebaut sein können. Die Erfindung betrifft auch eine derart kompakt bauende Getriebebaueinheit, wie sie im Anspruch 11 und in der nachfolgenden Figurenbeschreibung offenbart ist.

In weiterer Ausgestaltung der Erfindung weist die nicht mechanische Antriebseinheit eine Steuereinheit auf, die Lenksignale einer Lenkeinheit im

Bereich eines Fahrerhauses erfasst und in Steuerbefehle für die Ansteuerung der Triebräder umsetzt. Die Steuereinheit ist vorzugsweise hydraulisch, elektrohydraulisch, elektronisch oder elektrisch ausgeführt und ist sowohl bei einer nichtmechanischen Antriebseinheit in Form einer hydraulischen Antriebseinheit als auch bei einer nichtmechanischen Antriebseinheit in Form einer elektrischen Antriebseinheit vorgesehen.

In weiterer Ausgestaltung der Erfindung ist dem mechanischen Fahrantriebsstrang eine Brems- und/oder Kupplungsfunktionseinheit zugeordnet. Dadurch kann der Fahrantrieb des Kettenfahrzeugs gesteuert werden. Insbesondere ist die Brems- und/oder Kupplungsfunktionseinheit zur Abschaltung des mechanischen Fahrantriebsstranges für eine Rückwärtsfahrt des Kettenfahrzeugs vorgesehen. Die Bremsfunktion kann auch bei einem Wenden des Kettenfahrzeugs auf der Stelle notwendig sein, da dann ein Triebrad vorwärts und das andere Triebrad rückwärts angetrieben wird.

In weiterer Ausgestaltung der Erfindung weist der mechanische Fahrantriebsstrang ein Differential auf, das zwischen den beiden Triebrädern wirkt. Dadurch ist es möglich, den mechanischen Fahrantriebsstrang zentral vom Verteilergetriebe abzuzweigen. Die Aufteilung der Antriebskraft des mechanischen Fahrantriebsstranges auf die Triebräder beider Kettenlaufwerksseiten erfolgt dabei über das Differential.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig.1: zeigt schematisch ein Blockschaltbild eines Fahr- und Lenkantriebs einer Ausführungsform eines erfindungsgemäßen Kettenfahrzeugs,
- Fig. 2: perspektivisch ein Fahrwerk des Kettenfahrzeugs gemäß Fig. 1 mit einer Ausführungsform einer erfindungsgemäßen, kompakt bauenden Getriebebaueinheit für die Fahr- und Lenkantriebfunktion gemäß Fig. 1 und
- Fig. 3: ein Leistungs/Geschwindigkeits-Diagramm für den Fahrantrieb des Kettenfahrzeugs nach den Fig. 1 und 2.

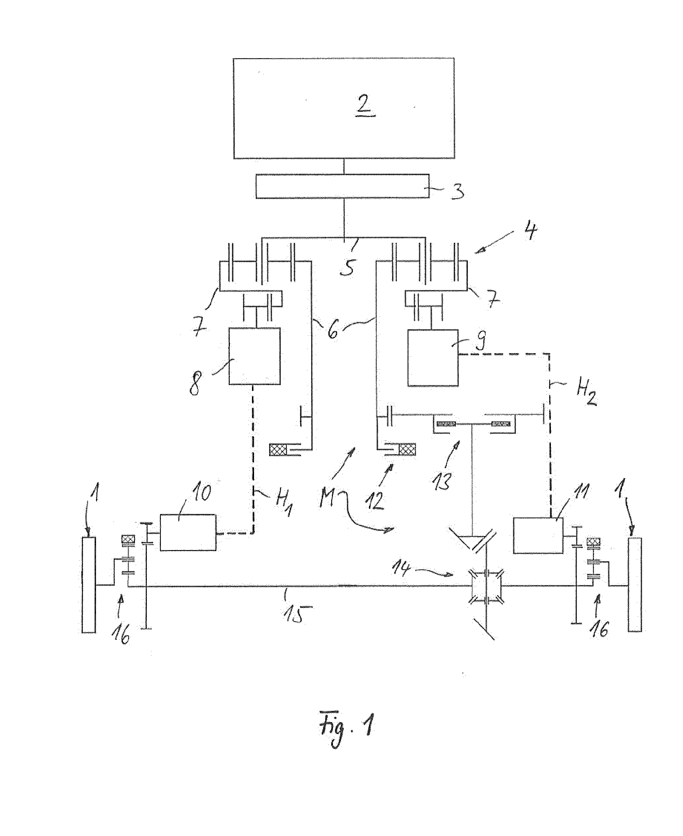

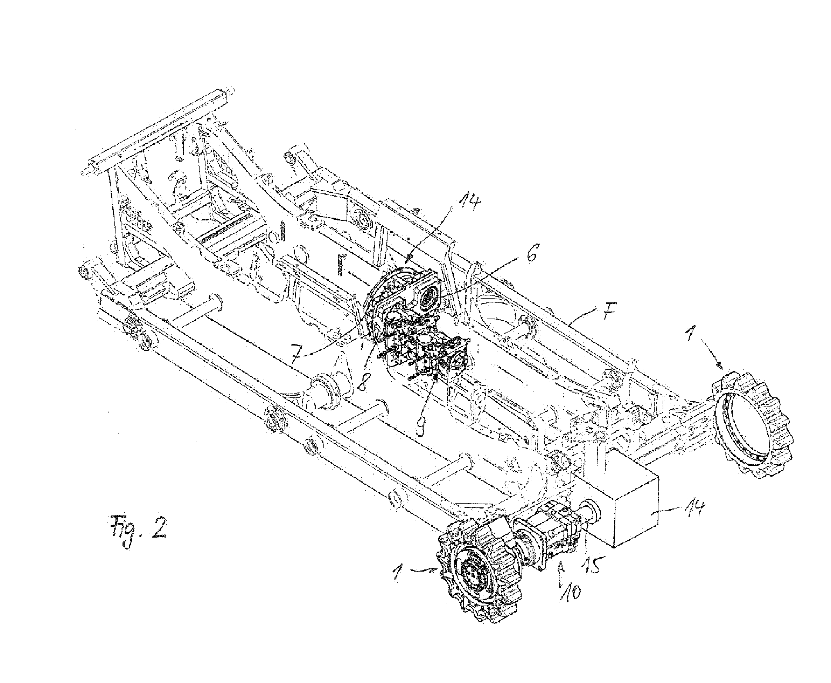

Ein Kettenfahrzeug gemäß den Fig. 1 und 2 in Form einer Pistenraupe dient zur Bearbeitung und zur Gestaltung von Schneegeländen in Ski-und Snowboardgebieten. Die Pistenraupe weist gemäß Fig. 2 einen Fahrwerksrahmen F auf, auf dem unter anderem ein Fahrerhaus für einen die Pistenraupe steuernden Fahrer angeordnet ist. Frontseitig ist die Pistenraupe mit einem Räumschild versehen. Heckseitig weist die Pistenraupe einen Heckgeräteträger auf, an dem ein Pistenbearbeitungsgerät wie insbesondere eine Heckfräsenanordnung lösbar befestigt werden kann. Die Pistenraupe weist ein Kettenlaufwerk auf, dessen beide Kettenlaufwerksseiten über jeweils ein Triebrad 1 angetrieben werden. Je nach Steuerung der Triebräder 1 erfolgt eine Vorwärts- oder Rückwärtsfahrt der Pistenraupe und/oder ein Lenkvorgang. Für einen Lenkvorgang werden in einfacher Weise die beiden Kettenlaufwerksseiten mit unterschiedlichen Geschwindigkeiten beaufschlagt, indem die Triebräder 1 entsprechend unterschiedlich angesteuert werden.

Zum Fahren und Lenken der Pistenraupe gemäß den Fig. 1 und 2 ist ein zentraler Antriebsmotor 2 in Form eines Dieselmotors vorgesehen, der über ein Zweimassenschwungrad 3 antriebseitig mit einem Verteilergetriebe 4 in Verbindung steht. Das Verteilergetriebe 4 ist als Planetengetriebe gestaltet, dessen Planetenträger 5 mit einer Antriebswelle des zentralen Antriebsmotors 2 verbunden ist. Das Planetengetriebe weist zwei Leistungsabtriebe 6, 7 auf, von denen ein erster Leistungsabtrieb 6 über ein Sonnenrad des Planetengetriebes 4 mit einem mechanischen Fahrantrieb M verbunden ist, der nachfolgend näher beschrieben wird. Der zweite Leistungsabtrieb 7 treibt mittels eines äußeren Hohlrades des Planetengetriebes 4 zwei Hydraulikpumpen 8, 9 einer hydraulischen Antriebseinheit an, die eine nichtmechanische Antriebseinheit im Sinne der Erfindung bildet. Die nichtmechanische Antriebseinheit bildet einen stufenlosen Antriebszweig der Leistungsverzweigung. Die eine Hydraulikpumpe 8 ist einer - in Fahrtrichtung gesehen - linken Kettenlaufwerksseite und die andere Hydraulikpumpe 9 einer rechten Kettenlaufwerksseite zugeordnet. Die hydraulische Antriebseinheit weist einen von der Hydraulikpumpe 8 gespeisten, hydrostatischen Antriebsmotor 10 für das linke Triebrad 1 auf. Zudem weist die hydraulische Antriebseinheit einen weiteren hydrostatischen Antriebsmotor 11 für das rechte Triebrad 1 der rechten Kettenlaufwerksseite auf, der von der Hydraulikpumpe 9 gespeist wird. Die beiden Hydraulikpumpen 8, 9 werden durch den Leistungsabtrieb 7, der durch das Hohlrad des Planetengetriebes gebildet ist, parallel beaufschlagt. In nicht näher dargestellter Weise ist eine Steuereinheit vorgesehen, die die hydraulische Antriebseinheit, die aus den beiden Hydraulikpumpen 8, 9 und den hydrostatischen Antriebsmotoren 10, 11 gebildet ist, je nach Fahr- oder Lenkbefehl des Fahrers der Pistenraupe ansteuert. Zwischen der Hydraulikpumpe 8 und dem hydrostatischen Antriebsmotor 10 wird demzufolge ein Hydraulikfunktionsstrang H₁ und zwischen der Hydraulikpumpe 9 und dem rechten hydrostatischen Antriebsmotor 11 ein Hydraulikfunktionsstrang H₂ gebildet.

Ergänzend und parallel zu der hydraulischen Antriebseinheit wirkt auf die beiden Triebräder 1 der mechanische Fahrantriebsstrang M, der vom Leistungsabtrieb 6 des Verteilergetriebes 4 abgeleitet ist und über das Sonnenrad des Planetengetriebes und eine Kupplung 13 eine mechanische Antriebsübertragung über eine Schrägverzahnung auf ein Differential 14 vornimmt. Vom Differential 14 aus werden die beiden Triebräder 1 über entsprechende Antriebswellenabschnitte 15 mechanisch angetrieben, wie Fig. 1 zu entnehmen ist. Zur Kraftübertragung von den Antriebswellenabschnitten 15 und dem Differential 14 auf die Triebräder 1 ist jedem Triebrad 1 noch ein Untersetzungsgetriebe 16 vorgeschaltet. Vom Sonnenrad des Leistungsabtriebs 6 erfolgt eine Kraftübertragung mittels einer Übersetzungsstufe des mechanischen Fahrantriebsstranges M, die der Kupplung 13 vorgeschaltet ist. Zudem ist dem Leistungsabtrieb 6, das heißt dem Sonnenrad des Planetengetriebes, eine Bremse 12 zugeordnet, die bei Bedarf ein Abbremsen des Sonnenrades des Planentengetriebes ermöglicht. Bremse 12 und Kupplung 13 werden insbesondere für eine Rückwärtsfahrt des Kettenfahrzeugs eingesetzt.

Die Bremse 12 wird zudem für einen Wendevorgang des Kettenfahrzeugs eingesetzt, bei dem ein Triebrad vorwärts und das gegenüberliegende Triebrad rückwärts angetrieben werden.

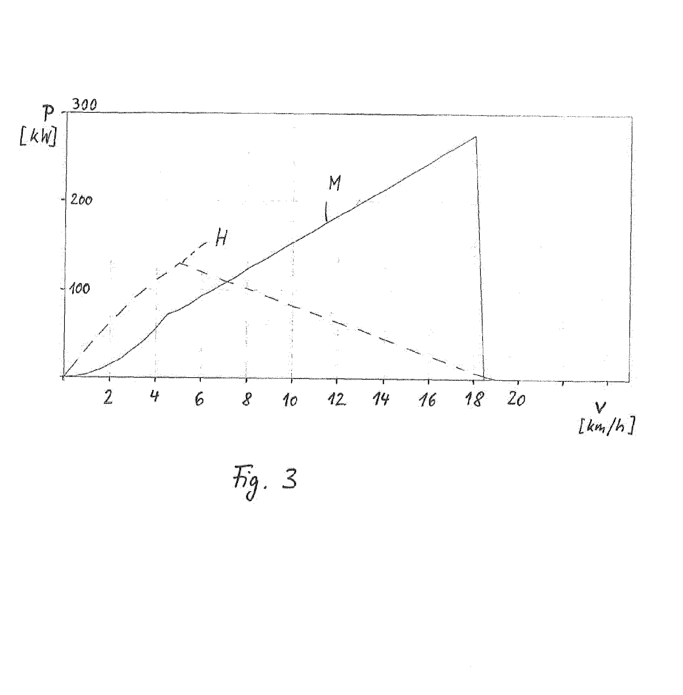

Anhand der Fig. 3 ist die Leistungsverteilung über die Fahrzeuggeschwindigkeit der Pistenraupe gemäß den Fig. 1 und 2 aufgeführt. Dabei ist mit durchgezogener Linie die Leistung des mechanischen Fahrantriebsstranges M und mit gestrichelter Linie die Leistung des gemeinsamen Hydraulikfunktionsstranges H dargestellt, der die Hydraulikfunktionsstränge H₁ und H₂ umfasst. Die Verteilung der Leistung P in der Einheit kW ist über den typischen Fahrgeschwindigkeitsbereich einer Pistenraupe zwischen 0 und etwa 20 km/h aufgezeichnet. Die Fahrgeschwindigkeit ist mit v bezeichnet. Anhand des Diagrammes gemäß Fig. 3 ist erkennbar, dass die Pistenraupe im Wesentlichen hydraulisch angefahren wird. Je höher die Fahrgeschwindigkeit ist, desto höher ist auch der Leistungsanteil des mechanischen Fahrantriebsstranges M.

In praktischer Ausführung des Blockschaltbildes nach Fig. 1 erfolgt die parallele Antriebsübertragung aus hydraulischer Antriebseinheit und mechanischem Fahrantriebsstrang auf die Triebräder 1 gemäß Fig. 2 dadurch, dass durch jeden hydrostatischen Antriebsmotor 10 der entsprechende Antriebswellenabschnitt 15 des mechanischen Fahrantriebsstranges M zentral hindurchragt und als Durchtrieb gestaltet ist. Bei einer anderen Ausgestaltung der Erfindung erfolgt die Leistungsübertragung des mechanischen Fahrantriebsstranges gemäß Fig. 1 über ein Stirnrad im Bereich des jeweiligen Triebrades, das mit der Triebradachse gekoppelt ist. Der hydraulische Fahrantriebsstrang wirkt auf die Triebradachse. Die Anordnung der Hydraulikpumpen 8 und 9 am Verteilergetriebe 4 wird durch eine kompakte Getriebebaueinheit 14 gebildet, an der abtriebseitig zum einen in Reihe hintereinander die beiden Hydraulikpumpen 8, 9 angebaut sind. Zum anderen ist abtriebsseitig ein Flansch für die dem mechanischen Leistungsabtrieb 6 zugeordneten Komponenten, nämlich die Bremsen 12 und die Kupplung 13, vorgesehen. Die Übersetzungsstufe, die der Kupplung 13 vorgeschaltet ist, ist ebenfalls in der kompakten Getriebebaueinheit 14 integriert. Durch die Gestaltung der Getriebebaueinheit 14 wird sowohl eine Leistungsverzweigung als auch eine hydraulische Lenkfunktion für die Pistenraupe auf relativ kleinem Bauraum verwirklicht. Zudem kann die Getriebebaueinheit 14 als vormontierte Einheit angeliefert und verbaut werden, so dass auch eine vereinfachte Montage des Antriebsstranges gewährleistet ist.

## Patentansprüche

1. Kettenfahrzeug mit einem zentralen Antriebsmotor sowie mit zwei Kettenlaufwerksseiten, die jeweils durch ein Triebrad für einen Fahr- und Lenkbetrieb antreibbar sind, wobei die Triebräder mit dem zentralen Antriebsmotor durch wenigstens einen Antriebsstrang in Wirkverbindung stehen, **dadurch gekennzeichnet, dass** der Antriebsstrang ein Verteilergetriebe (4) umfasst, das antriebsseitig mit dem zentralen Antriebsmotor (2) verbunden ist und das zwei Leistungsabtriebe (6, 7) aufweist, wobei ein erster Leistungsabtrieb (6) einem mechanischen Fahrantriebsstrang (M) für die beiden Triebräder (1) zugeordnet ist, und wobei ein zweiter Leistungsabtrieb (7) eine nichtmechanische Antriebseinheit (8 bis 11) speist, die die Triebräder (1) parallel zu dem Fahrantriebsstrang (M) antreibt und eine Lenkfunktion des Kettenfahrzeugs übernimmt.

2. Kettenfahrzeug nach Anspruch 1, **dadurch gekennzeichnet, dass** die nichtmechanische Antriebseinheit (8 bis 11) durch eine hydraulische Antriebseinheit gebildet ist.

3. Kettenfahrzeug nach Anspruch 1, **dadurch gekennzeichnet, dass** die nichtmechanische Antriebseinheit durch eine elektrische Antriebseinheit gebildet ist.

4. Kettenfahrzeug nach Anspruch 2, **dadurch gekennzeichnet, dass** jedem Triebrad (1) jeweils ein hydrostatischer Motor (10) der hydraulischen Antriebseinheit zugeordnet ist, der mit einem mechanischen Durchtrieb des mechanischen Fahrantriebsstranges (M) versehen ist.

5. Kettenfahrzeug nach Anspruch 1, **dadurch gekennzeichnet, dass** das Verteilergetriebe (4) als Planetengetriebe gestaltet ist, dessen Planetenträger (5) vom zentralen Antriebsmotor (2) angetrieben ist, und das wenigstens einen Planetensatz umfasst, dem die beiden Leistungsabtriebe (6, 7) zugeordnet sind.

6. Kettenfahrzeug nach Anspruch 1 oder 5, **dadurch gekennzeichnet, dass** der zentrale Antriebsmotor als Verbrennungsmotor, insbesondere als Dieselmotor, gestaltet ist.

7. Kettenfahrzeug nach Anspruch 2 oder 4, **dadurch gekennzeichnet, dass** die hydraulische Antriebseinheit zwei Hydraulikpumpen (8, 9) umfasst, die baulich nebeneinander_am Verteilergetriebe (4) angeordnet und von dem Leistungsabtrieb (7) des Verteilergetriebes (4) gemeinsam_angetrieben sind.

8. Kettenfahrzeug nach wenigstens einem der vorhergehenden Ansprüche, **dadurch gekennzeichnet, dass** die Antriebseinheit eine Steuereinheit aufweist, die Lenksignale einer Lenkeinheit im Bereich eines Fahrerhauses erfasst und in Steuerbefehle für die Ansteuerung der Triebräder (1) umsetzt.

9. Kettenfahrzeug nach Anspruch 1, **dadurch gekennzeichnet, dass** dem mechanischen Fahrantriebsstrang (M) eine Brems-und/oder Kupplungsfunktionseinheit (12, 13) zugeordnet ist.

10. Kettenfahrzeug nach Anspruch 9, **dadurch gekennzeichnet, dass** der mechanische Fahrantriebsstrang (M) ein Differential (4) aufweist, das zwischen den beiden Triebrädern (1) wirkt.

11. Getriebebaueinheit (14) für einen Antriebsstrang eines Kettenfahrzeugs nach einem der vorhergehenden Ansprüche, in der das Verteilergetriebe (4), die Hydraulikpumpen (8, 9) und die Brems- und/oder Kupplungsfunktionseinheit (12, 13) integriert sind.
